# EUROPEAN PATENT SPECIFICATION

(11) **EP 3 343 878 B1**
(45) Date of publication and mention of the grant of the patent: **17.07.2019**
(21) Application number: 17202708.8
(22) Date of filing: 21.11.2017
(51) Int. Cl.: H04L 29/08, H04L 29/12, H04L 29/06

(54) **CROSS-DOMAIN COMMUNICATION METHODS AND PROXY SERVERS USING THE SAME**
VERFAHREN ZUR DOMÄNENÜBERGREIFENDEN KOMMUNIKATION UND PROXY-SERVER DAMIT
PROCÉDÉS DE COMMUNICATION INTER-DOMAINE ET SERVEURS PROXY LES UTILISANT

(30) Priority: 29.12.2016 US 201662439931 P; 05.07.2017 CN 201710541603
(43) Date of publication of application: 04.07.2018
(73) Proprietor: Synology Incorporated, Taipei 103 (TW)
(72) Inventor: Chang, Jen-Yao, Taipei 103 (TW); Yang, Zuo-Rong, Taipei 103 (TW)
(74) Representative: Michalski Hüttermann & Partner Patentanwälte mbB

(56) References cited:
- US-A1- 2010 186 079
- US-A1- 2015 052 258
- US-A1- 2016 197 924

## Description

### BACKGROUND OF THE APPLICATION

### Field of the Application

The application relates generally to proxy technologies for proxy servers, and more particularly, to a proxy server capable of solving the problems caused during cross-domain communications.

### Description of the Related Art

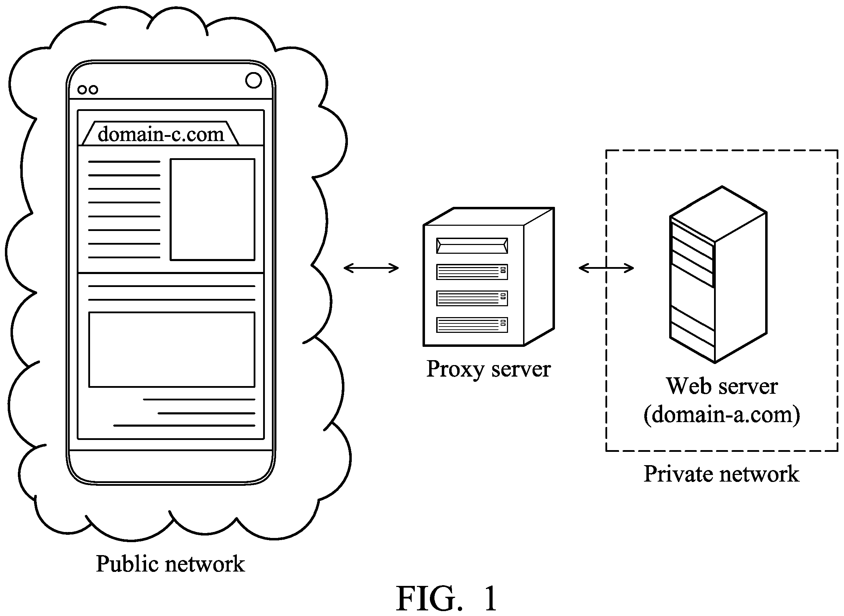

In typical network planning, proxy servers are commonly adopted and disposed between internal networks (also called private networks) and external networks (also called public networks) to control the communications therebetween, so as to enhance privacy and security of network terminal devices. For example, when a network terminal device in a public network requests to access a web server in a private network, the proxy server forwards the web access request received from the network terminal device to the web server and then forwards the web information provided by the web server to the network terminal device. In addition, the proxy server replaces the domain name of the web server with a virtual or predetermined domain name. As shown in Fig. 1, the real domain name of the web server A is "domain-a.com", but the network terminal device in the public network recognizes the domain name of the web server A to be "domain-c.com" which is manipulated by the proxy server.

With the disposition of a proxy server between the private network and the public network, the network terminal device in the public network and the web server in the private network cannot communicate directly with each other. Advantageously, the web server in the private network is able to hide its Internet Protocol (IP) address from any device in the public network, thereby avoiding network attacks from the public network and being free of any content filtering attempts. In response, the network terminal device in the public network is unable to identify or access the web server in the private network.

However, there are cross-domain communications during which the domain name of a requesting server in the private network is replaced by the proxy server with a predetermined domain name. As a result, the receiving server of the cross-domain communications may reject the access request and the cross-domain communications may not be successful, due to the receiving server not being able to identify the predetermined domain name.

In a common scenario, the network terminal device in the public network loads a web page provided by a web server in the private network, and the web page further initiates an access request to another server. For example, the web page provided by a web server A may include contents, such as Cascading Style Sheets (CSS), advertisements, or images, which need to be obtained from a server B. However, since server B only accepts the access request from web server A (i.e., only the access request sent from the domain name "domain-a.com" is acceptable to the server B) but the domain name of the web server A in the access request has been replaced with "domain-c.com" by the proxy server, server B rejects the access request. Consequently, these contents which need to be obtained from server B are not displayed in the web page loaded by the network terminal device in the public network.

In another scenario, there may be some web authentication protocols which use source/destination domain name as a parameter for authentication. For example, when a user device in the public network accesses the login page provided by a web server A in the private network and inputs his/her account and password on the login page, the web server A sends the user's account and passwords, along with its domain name, to an authentication server, so that the authentication server may identify which web server the user is trying to log into and determine whether the account and password is authorized to access the web server A. However, the authentication server only recognizes the account and password corresponding to the domain name "domain-a.com" but the domain name of the web server A in the authentication request has been replaced with "domain-c.com" by the proxy server, and so the authentication server rejects the authentication request and the login fails.

In yet another scenario, there may be some web programming languages which use domain name to indicate communication destinations. For example, the network terminal device in the public network launches a browser in which a tab window loads a web page a1 provided by a web server A in the private network and another table window loads a web page b1 provided by a web server B, in which the web page b1 includes a javascript code sending a string 'hello' to the tab window of the web page a1. However, due to the domain name of web server A having been replaced with "domain-c.com" by the proxy server when the web page a1 is loaded on the browser, the tab window of the web page a1 cannot receive the string 'hello' from the web page b1.

US 2015/0052258 A1 describes a method for a direct map proxy system and protocol are disclosed. Specifically, the method includes the steps of: receiving from a user device a first domain name, mapping it to a different second domain name associated with a target device, and using the second domain name to initiate and establish a connection between the user device and target device.

Therefore, it is desirable to have a cross-communication method that can enable proxy servers to solve the aforementioned problems that can arise during cross-domain communications.

### BRIEF SUMMARY OF THE APPLICATION

The invention is defined by the features of the independent claims. Preferred embodiments are defined by the features of the dependent claims.

In one aspect of the application, a proxy server comprising a communication device and a controller is provided. The communication device is configured to provide network connections to a network terminal device in a public network and a first server and a second server in a private network, wherein the first server has a first domain name identifiable in the private network and a predetermined domain name identifiable in the public network, and the second server has a second domain name identifiable in the private network. When receiving a first web access request from the network terminal device, which indicates that it was sent from the predetermined domain name to the second domain name, the controller is configured to replace the predetermined domain name in the first web access request with the first domain name and forward the first web access request to the second server according to the second domain name in the first web access request. When receiving a first web access response from the second server, which indicates that it was sent from the second domain name to the first domain name, the controller is configured to replace the first domain name with the predetermined domain name in the first web access response and forward the first web access response to the network terminal device.

In another aspect of the application, the cross-domain communication method, executed by a proxy server connected to a network terminal device in a public network and a first server and a second server in a private network, is provided. The first server has a first domain name identifiable in the private network and a predetermined domain name identifiable in the public network, and the second server has a second domain name identifiable in the private network. The cross-domain communication method comprises the following steps: when receiving a first web access request from the network terminal device, which indicates that it was sent from the predetermined domain name to the second domain name, replacing the predetermined domain name in the first web access request with the first domain name and forwarding the first web access request to the second server according to the second domain name in the first web access request, and when receiving a first web access response from the second server, which indicates that it was sent from the second domain name to the first domain name, replacing the first domain name with the predetermined domain name in the first web access response and forwarding the first web access response to the network terminal device.

Other aspects and features of the application will become apparent to those with ordinary skill in the art upon review of the following descriptions of specific embodiments of the proxy servers and the cross-domain communication methods.

### BRIEF DESCRIPTION OF THE DRAWINGS

The application can be more fully understood by reading the subsequent detailed description and examples with references made to the accompanying drawings, wherein:
Fig. 1 is a schematic diagram illustrating the proxy service used in a non-cross-domain communication;
Fig. 2 is a schematic diagram illustrating a network environment according to an embodiment of the application;
Fig. 3 is a block diagram illustrating the system architecture of the proxy server 10 according to an embodiment of the application;
Fig. 4 is a flow chart illustrating the cross-domain communication method according to an embodiment of the application;
Fig. 5 is a schematic diagram illustrating cross-domain communications according to an embodiment of the application;
Fig. 6 is a schematic diagram illustrating cross-domain communications according to another embodiment of the application; and
Figs. 7A and 7B are schematic diagrams illustrating cross-domain communications according to yet another embodiment of the application.

### DETAILED DESCRIPTION OF THE APPLICATION

The following description is made for the purpose of illustrating the general principles of the application and should not be taken in a limiting sense. It should be understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

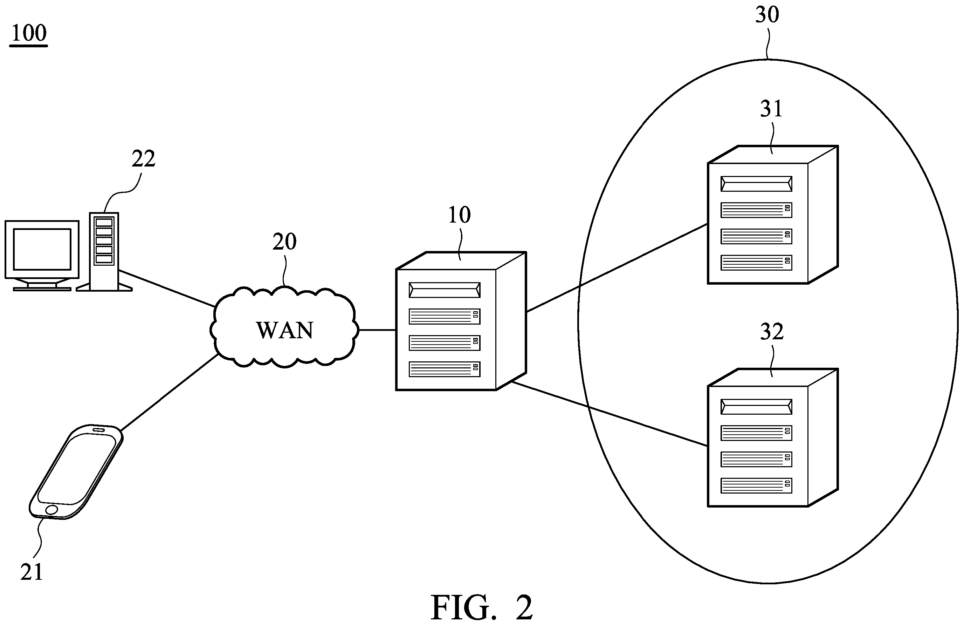

Fig. 2 is a schematic diagram illustrating a network environment according to an embodiment of the application. The network environment 100 includes a proxy server 10, a WAN 20, and a LAN 30, wherein the proxy server 10 is disposed between the WAN 20 and the LAN 30.

The WAN 20 may also be called an external network or a public network, which may include telecommunication network(s), optical network(s), and/or Asymmetric Digital Subscriber Line (ADSL) network(s). The WAN 20 generally spans a wide range: from tens of kilometers to thousands of kilometers. For example, the WAN 20 may cover areas, cities, and/or countries which may be connected via the Internet.

There may be several network terminal devices, such as the network terminal devices 21 and 22, disposed on the WAN 20. Each of the network terminal devices 21 and 22 may be a notebook PC, a desktop computer, a workstation, a server, a smartphone, or panel PC, etc. For example, the network terminal device 21 may be a smartphone for a user to browse the Internet, while the network terminal device 22 may be a Domain Name System (DNS) server for providing the service of domain name resolution.

The LAN 30 may also be called an internal network or a private network, which may include Ethernet(s), twisted-pair cable network(s), and/or coaxial cable networks. The LAN 30 generally covers a small area, such as an office or a floor of a building.

There may be several network communication devices, such as the network communication devices 31 and 32, disposed on the LAN 30. Each of the network communication devices 31 and 32 may be a notebook PC, a desktop computer, a smartphone, a panel PC, a workstation, a server, or any consumer electronic device with a wired/wireless communication function. For example, the network communication device 31 or 32 may be a web server for providing the service of web page hosting, or may be an authentication server for providing the service of user authentication.

The proxy server 10 is responsible for connecting the WAN 20 and the LAN 30 (i.e., acting as a router). In addition, the proxy server 10 provides proxy services to allow the network communication devices 31 and 32 in the LAN 30 to appear anonymous to the WAN 20. That is, the network terminal devices 21 and 22 are unable to directly access the network communication devices 31 and 32, without the proxy server 10 serving as an intermediary.

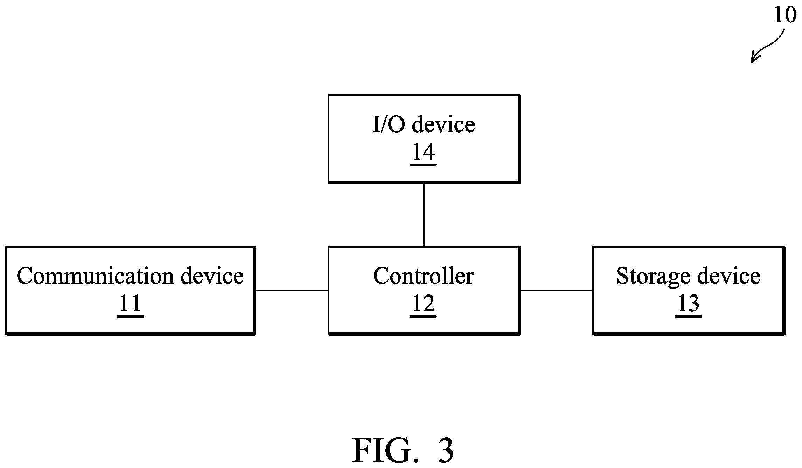

Fig. 3 is a block diagram illustrating the system architecture of the proxy server 10 according to an embodiment of the application. The proxy server 10 includes a communication device 11, a controller 12, a storage device 13, and an Input/Output (I/O) device 14.

The communication device 11 is responsible for providing network connections to the WAN 20 (including the network terminal devices 21 and 22 on the WAN 20) and the LAN 30 (including the network communication device 31 and 32 on the LAN 30). The communication device 11 may provide the network connections using a wired/wireless communication technology, such as the Ethernet technology, Wireless Fidelity (Wi-Fi) technology, Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, or Time- Division LTE (TD-LTE) technology.

In one embodiment, the communication device 11 may include an Ethernet card for providing the function of wired communications. In another embodiment, the communication device 11 may include a wireless transceiver for providing the function of wireless communications, wherein the wireless transceiver may include a baseband device, a Radio Frequency (RF) device, and an antenna. The baseband processing device may contain multiple hardware components to perform baseband signal processing, including Analog-to-Digital Conversion (ADC)/Digital-to-Analog Conversion (DAC), gain adjusting, modulation/demodulation, encoding/decoding, and so on. The RF device may receive RF wireless signals via the antenna, convert the received RF wireless signals into baseband signals, which are processed by the baseband processing device, or receive baseband signals from the baseband processing device and convert the received baseband signals into RF wireless signals, which are later transmitted via the antenna. The RF device may also contain multiple hardware components to perform radio frequency conversion. For example, the RF device may comprise a mixer to multiply the baseband signals with a carrier oscillated in the radio frequency of the supported wireless technologies, wherein the radio frequency may be 2.4GHz, 3.6GHz, 4.9GHz, or 5GHz utilized in the Wi-Fi technology, or another radio frequency, depending on the wireless technology in use.

The controller 12 may be a general-purpose processor, a Central Processing Unit (CPU), a Micro Control Unit (MCU), an Application Processor (AP), or a Digital Signal Processor (DSP), which includes various circuits for performing the functions of data processing and computing, controlling the communication device 11 to provide network connections, and reading or writing data and/or program code from or to the storage device 13, and receiving user inputs or outputting User Interface (UI) signals via the I/O device 14. In addition, the controller 12 includes other circuits for providing proxy services.

In particular, the controller 12 coordinates the operations of the communication device 11, the storage device 13, and the I/O 14 for performing the cross-domain communication method of the present application.

The storage device 13 is a non-transitory computer-readable storage medium, such as a Random Access Memory (RAM), a flash memory, a cache memory, a hard drive, an optical disc drive, or any combination thereof, which is used for storing computer-executable data, instructions, or program code, including mapping information of domain names, predefined aliases, program code of the cross-domain communication method, and/or program code of an OS, application(s), and/or communication protocol(s).

As will be appreciated by persons skilled in the art, the circuits in the controller 12 will typically include transistors that are configured in such a way as to control the operation of the circuitry in accordance with the functions and operations described herein. As will be further appreciated, the specific structure or interconnections of the transistors will typically be determined by a compiler, such as a Register Transfer Language (RTL) compiler. RTL compilers may be operated by a processor upon scripts that closely resemble assembly language code, to compile the script into a form that is used for the layout or fabrication of the ultimate circuitry. Indeed, RTL is well known for its role and use in design of electronic and digital systems.

The I/O device 14 may include one or more buttons, light devices, a keyboard, a mouse, a touch pad, a microphone, or a speaker, etc., which serves as a Man-Machine Interface (MMI). For example, a reset signal may be generated when a button is pushed and the reset signal may trigger the controller 12 to perform a reset procedure of the proxy server 10, or a light device may emit lights in different colors to notify the user whether the proxy server 10 functions normally or not.

It should be understood that the components described in the embodiment of Fig. 3 are for illustrative purposes only and are not intended to limit the scope of the application. For example, the proxy server 10 may further include a display device (e.g., a Liquid-Crystal Display (LCD), Light-Emitting Diode (LED) display, or Electronic Paper Display (EPD), etc.), and/or a power supply, etc.

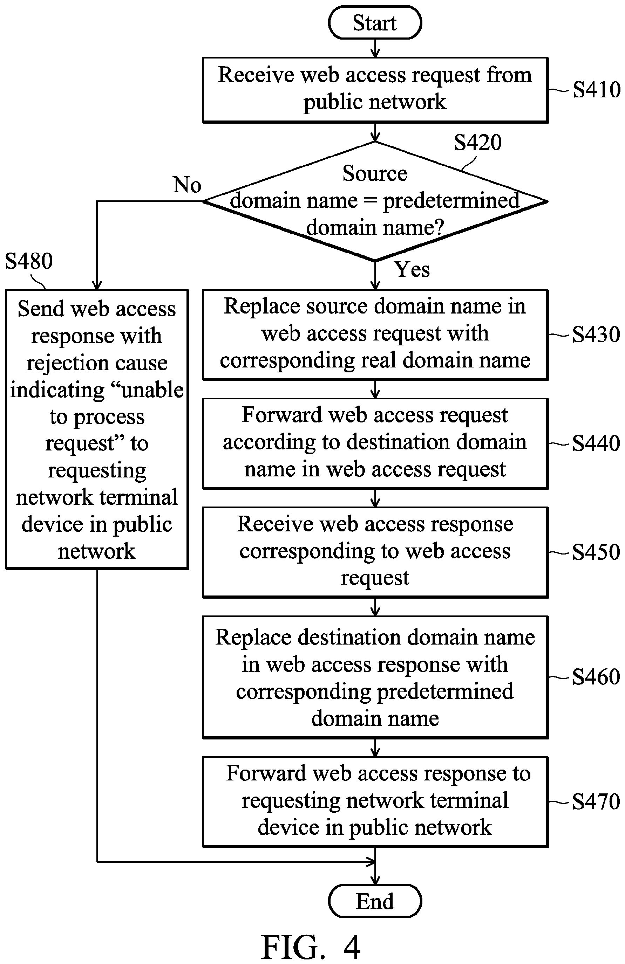

Fig. 4 is a flow chart illustrating the cross-domain communication method according to an embodiment of the application. In this embodiment, the cross-domain communication method is applied to a proxy server, e.g., the proxy server 10.

To begin, the proxy server receives a web access request from the public network (step S410), wherein the web access request indicates that it was sent from a source domain name to a destination domain name. That is, the web access request belongs to cross-domain communications. For example, a web access request is initiated when a web page provided by a web server (e.g., the network communication device 31) in the private network is loaded by a network terminal device (e.g., the network communication device 21) in the public network, but part of the web content needs to be obtained from another web server (e.g., the network communication device 32).

Subsequently, the proxy server determines whether the source domain name indicated in the web access request is a predetermined domain name (step S420). Specifically, the predetermined domain name refers to a virtual domain name of the web server in the private network, which is identifiable in the public network. Each web server in the private network may be configured to have a respective predetermined domain name, and the proxy server may store the mapping information of the real domain name and predetermined domain name of each web server in the private network.

In one embodiment, the web page provided by the web server in the private network may provide a single service, and the predetermined domain name of the web server may be set to a virtual domain name. For example, the real domain name of such a web server (e.g., the network communication device 31) is "domain-a.com" which is identifiable in the private network, and the predetermined domain name of the web server may be set to "domain-c.com".

In another embodiment, the web page provided by the web server in the private network may provide multiple services, the predetermined domain name of the web server may be set to a virtual domain name, and each service provided in the web page may be assigned with a predetermined domain name being the virtual domain name of the web server plus an alias. For example, the real domain name of such a web server (e.g., the network communication device 31) is "domain-a.com" which is identifiable in the private network, and the real domain names for the services provided in the web page are "mail.domain-a.com", "docs.domain-a.com", and "drive.domain-a.com". The predetermined domain name of the web server may be set to "domain-c.com", while the predetermined domain name of the services provided in the web page may be set to "alias.domain-c.com", wherein 'alias' may refer to any string, such as 'mail', 'docs', or 'drive', etc. Alternatively, the alias may be attached to the end of the virtual domain name "domain-c.com". For example, "domain-c.com/alias".

Each predetermined domain name may further include a port number. For example, "alias.domain-c.com:443" or "domain-c.com:443".

In addition, the predetermined domain names may be configured and registered to the DNS server(s) (e.g., the network terminal device 22) by the users in the private network or the administrator of the private network. Through the registration, the predetermined domain names (e.g., "domain-c.com", and "alias.domain-c.com", etc.) will be bound with the IP address (e.g., 10.11.55.66) of the proxy server and the binding information will be stored in the DNS server(s). After that, when a network terminal device (e.g., the network terminal device 21) in the public network wants to access a web server (e.g., the network communication device 31) in the private network, it sends an inquiry to the DNS server(s) to obtain the IP address (e.g., 10.11.55.66) bounded with the predetermined domain name (e.g., "domain-c.com", and "alias.domain-c.com", etc.) of the web server, and then sends the web access request to the proxy server according to the obtained IP address, where the web access request will be processed and forwarded to the web server in the private network. Alternatively, a DNS server may be incorporated into the proxy server to save the network terminal device in the public network from the signaling overhead regarding domain name resolution.

In another embodiment, the proxy server may be configured to provide a web portal. For example, the domain name of the web portal may be set to "vpn.example.com:443" or "login.vpn.example.com:443". The web portal may further include hyperlinks to multiple web sites. For example, the web portal may include a hyperlink to a web site "service.example.com" in the private network, and the predetermined domain name of the web site may be set to "service.vpn.example.com", wherein 'service' is an alias. Moreover, the web page may include a hyperlink to a web site "patents.google.com" in the public network, and the predetermined domain name of the web site may be set to "googlepatent.vpn.example.com", wherein 'googlepatent' is an alias. Hence, the network communication devices in the private network and the network terminal devices in the public network can all access the web portal at "vpn.example.com:443" or "login.vpn.example.com:443", and then access any web page in either the private network or the public network via the web portal.

Subsequent to step S420, if the source domain name indicated in the web access request is a predetermined domain name, the proxy server replaces the source domain name in the web access request with the real domain name (e.g., "domain-a.com") identifiable in the private network (step S430), and then forwards the web access request according to the destination domain name indicated in the web access request (step S440).

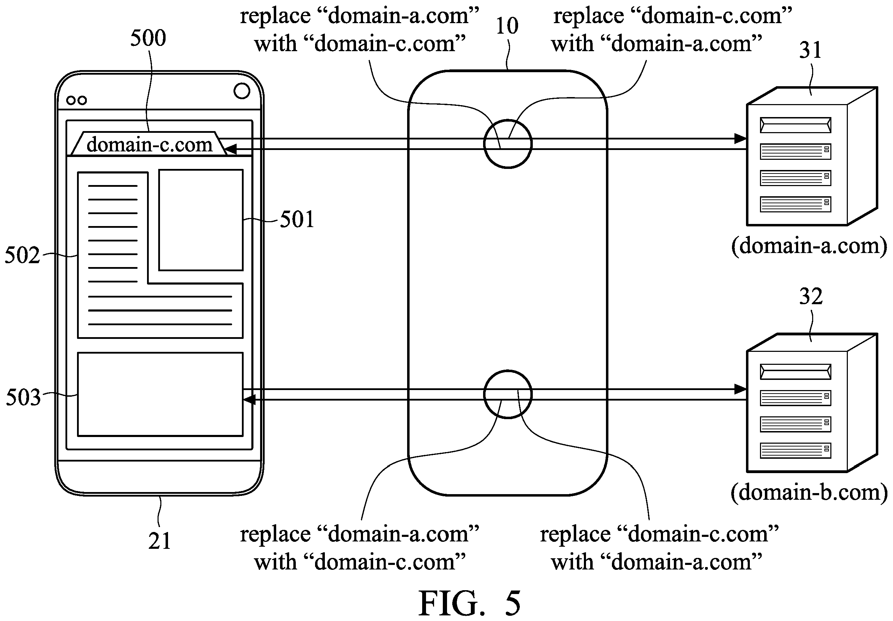

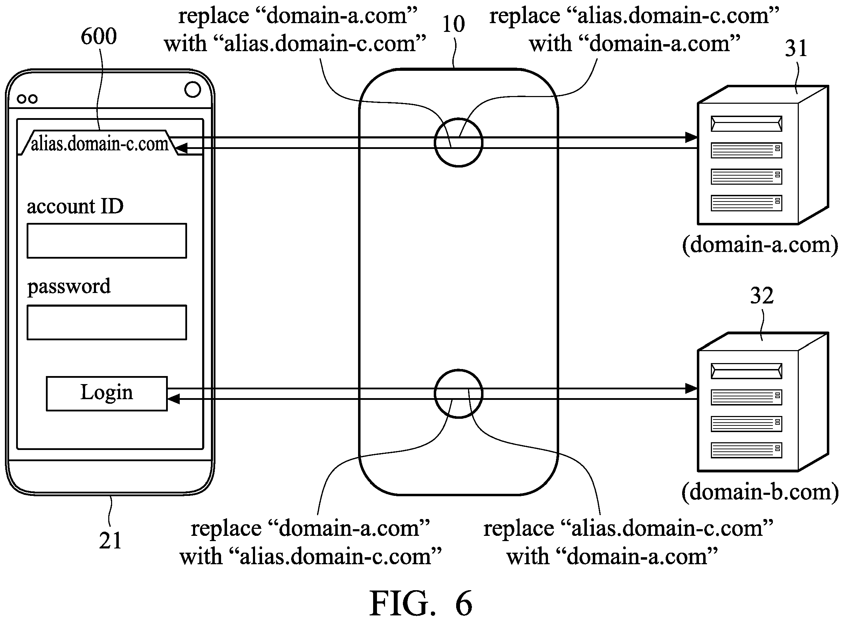

Subsequent to step S440, the proxy server receives a web access response corresponding to the web access request (step S450), wherein the web access response includes information concerning the requested web page, and the header of the web access response indicates that it was sent from the destination domain name (e.g., "domain-b.com") indicated in the web access request to the real domain name (e.g., "domain-a.com") corresponding to the source domain name (e.g., "domain-c.com") indicated in the web access request. Next, the proxy server replaces the destination domain name (e.g., "domain-a.com") indicated in the web access response with the corresponding predetermined domain name (e.g., "domain-c.com") (step S460), and forwards the web access response to the network terminal device in the public network, which initiates the web access request (step S470), and the cross-domain communication method ends. Detailed description of parsing the header of the web access response and replacing the domain names is made later in the embodiments of Figs. 5 and 6.

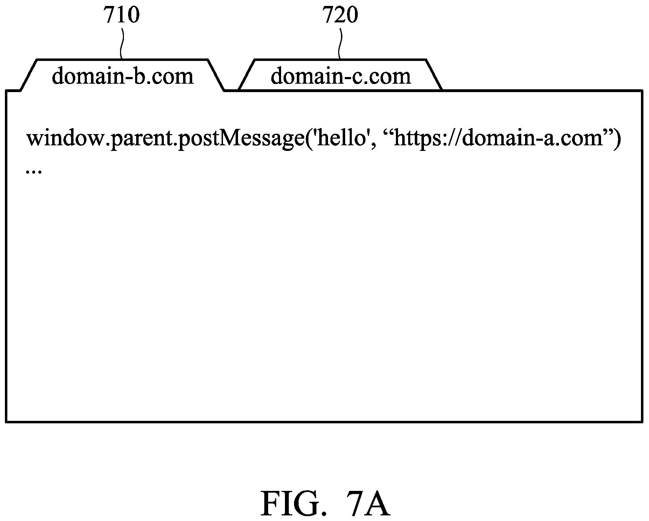

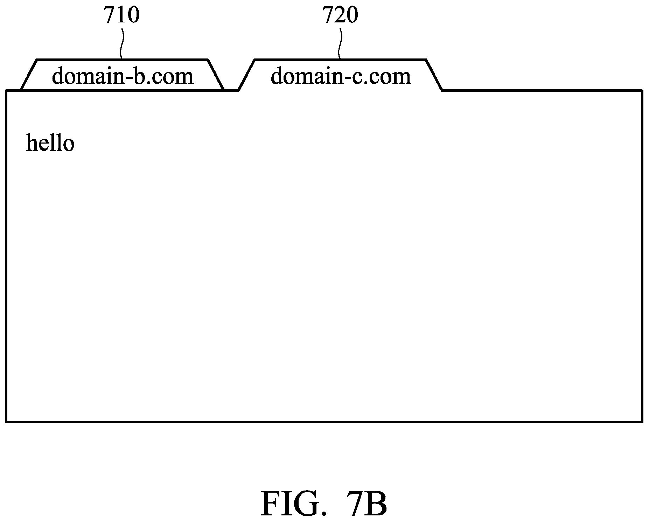

In another embodiment, the proxy server not only parses the header of the web access response to perform the domain name replacement, but also parses the content of the web access response to replace the real domain name indicated in the web access response with the corresponding predetermined domain name. Detailed description of parsing the content of the web access response and replacing the domain names is made later in the embodiment of Figs. 7A and 7B.

Subsequent to step S420, if the source domain name indicated in the web access request is not a predetermined domain name, the proxy server sends a web access response with a rejection cause indicating "unable to process request" to the requesting network terminal device in the public network (step S480), and the cross-domain communication method ends.

Fig. 5 is a schematic diagram illustrating cross-domain communications according to an embodiment of the application. In this embodiment, the web page 500 provided by the network communication device 31 (i.e., the first web server) in the private network is loaded with a domain name "domain-c.com" by the network terminal device 21 in the public network, and the proxy server 10 replaces the domain name "domain-c.com" with the real domain name "domain-a.com" identifiable in the private network.

As shown in Fig. 5, the domain name "domain-c.com" is displayed in the tab area of the web page 500 due to the real domain name having been replaced by the proxy server 10. The content of the web page 500 includes an image 501, a text 502, and advertisement 503, wherein the image 501 and the text 502 are provided by the first web server in the private network (i.e., the image 501 and the text 502 are already included in the web information provided by the first web server), and the advertisement 503 is to be obtained from the network communication device 32 (i.e., the second web server) in the private network. The network terminal device 21 in the public network loads the web page 500 after receiving the web information of the web page 500 from the first web server in the private network. When loading the web page 500, a web access request to the second web server in the private network is initiated by the content of the web page 500. That is, loading the web page 500 involves cross-domain communication. For example, the web information provided by the first web server may be presented in HyperText Markup Language revision 5 (HTML5) code, the image 501 and the text 502 may be defined by an img element and a font element in the HTML5 code, and the advertisement 503 may be defined by a canvas element in the HTML5 code, as follows. 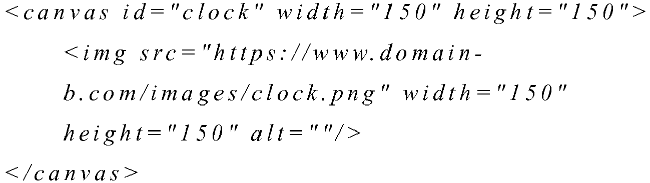 Specifically, the img element defines the image to be displayed in the canvas element, and the src attribute in the img element defines the source of the image to be the second web server (with the domain name "domain-b.com") in the private network. Therefore, when this part of the web page 500 is loaded, the network terminal device 21 in the public network sends the web access request to the second web server in the private network, wherein the web access request indicates that it was sent from the domain name "domain-c.com" to the domain name "domain-b.com".

When receiving the web access request, the proxy server 10 replaces the source domain name "domain-c.com" in the web access request with "domain-a.com", and then forwards the web access request to the second web server in the private network. It should be noted that, in this embodiment, even if the second web server only accepts web access requests from the first web server (i.e., only web access requests indicating that it was sent from the domain name "domain-a.com"), the advertisement 503 can be successfully accessed and displayed due to the proxy server 10 having replaced the source domain name in the web access request with the real domain name of the first web server.

Fig. 6 is a schematic diagram illustrating cross-domain communications according to another embodiment of the application. In this embodiment, the web page 600 provided by the network communication device 31 (i.e., the first web server) in the private network is loaded with a domain name "alias.domain-c.com" by the network terminal device 21 in the public network, and the proxy server 10 replaces the domain name "alias.domain-c.com" with the real domain name "domain-a.com" identifiable in the private network.

As shown in Fig. 6, the domain name "alias.domain-c.com" is displayed in the tab area of the web page 600 due to the real domain name having been replaced by the proxy server 10. The web page 600 is a login page to access the first web server, and when user inputs his/her account and password, the web page 600 further initiates an authentication request to the network communication device 32 (i.e., the second web server) in the private network. Please note that, in this embodiment, the parameters used by the second web server for authentication include the user account, the password, and the source domain name of the authentication request.

Since the source domain name of the authentication request is one of the authentication parameters, the authentication request may fail when a conventional proxy server is used due to the conventional proxy server not replacing the source domain name in the authentication request with the real domain name of the first web server, and the second web server not being able to identify the source domain name (i.e., "alias.domain-c.com") in the authentication request. Unlike a conventional proxy server, the proxy server 10 replaces the source domain name "alias.domain-c.com" in the authentication request with the real domain name "domain-a.com" of the first web server, so that the authentication request may be successfully processed by the second web server in the private network.

Figs. 7A and 7B are schematic diagrams illustrating cross-domain communications according to yet another embodiment of the application. In this embodiment, there are two tab windows in the browser, which display the web pages 710 and 720, respectively. The web page 710 provided by the network communication device 32 (i.e., the second web server) in the private network is loaded with a domain name "domain-b.com" by the network terminal device 21 in the public network. The web page 720 provided by the network communication device 31 (i.e., the first web server) in the private network is loaded with a domain name "domain-c.com" by the network terminal device 21 in the public network. The proxy server 10 replaces the domain name (i.e., "domain-c.com") of the first web server, which is identifiable in the public network, with the real domain name (i.e., "domain-a.com") identifiable in the private network, for loading the web page 720.

When the network terminal device 21 in the public network requests to access the web page 710 from the second web server in the private network, the proxy server 10 parses the content of the web page 710 provided by the second web server to determine whether the content includes a real domain name corresponding to a preconfigured virtual domain name (i.e., predetermined domain name). If the content includes such a real domain name, the proxy server 10 replaces the real domain name with the corresponding predetermined domain name, and then forwards the information of the web page 710 to the network terminal device 21 in the public network.

As shown in Fig. 7A, a part of the content of the web page 710 initiates sending a message to the tab window of the web page 720. For example, the content may be a javascript code: window.parent.postMessage('hello', "https://domain-a.com"). When the network terminal device 21 is loading the web page 710, the domain name "domain-a.com" in the content will be replaced by the proxy server 10 with "domain-c.com". After that, when the network terminal device 21 is loading the web page 720, the message sent from the web page 710 can be successfully received and displayed. By contrast, a conventional proxy server does not replace the real domain name in the web content with the corresponding predetermined domain name for cross-domain communications, and the web page 720 cannot receive the message sent from the web page 710.

In one embodiment, the cross-domain communication method of the present application may be implemented in program code as a content parser which is responsible for parsing the headers and contents of the web access requests and responses to replace the domain names therein as described in the embodiments of Figs. 4 to 7.

In view of the forgoing embodiments of Figs. 4 to 7, it will be appreciated that the cross-domain communication method of the present application solves the problems regarding provision of proxy services for cross-domain communications, by allowing the proxy server to parse the headers and contents of web access requests and responses and replace the domain names therein. Advantageously, cross-domain communications using proxy services may function successfully.

While the application has been described by way of example and in terms of preferred embodiment, it should be understood that the application cannot be limited thereto. Those who are skilled in this technology can still make various alterations and modifications without departing from the scope of this application. Therefore, the scope of the present application shall be defined and protected by the following claims.

Note that use of ordinal terms such as "first", "second", etc., in the claims to modify a claim element does not by itself connote any priority, precedence, or order of one claim element over another or the temporal order in which acts of the method are performed, but are used merely as labels to distinguish one claim element having a certain name from another element having the same name (except for use of ordinal terms), to distinguish the claim elements.

## Claims

1. A proxy server (10), comprising:
a communication device (11), configured to provide network connections to a network terminal device (21) in a public network (20) and a first server (31) and a second server (32) in a private network (30),
wherein the first server (31) has a first domain name identifiable in the private network (30) and a predetermined domain name identifiable in the public network (20), and the second server (32) has a second domain name identifiable in the private network (30); and
a controller (12), configured to:
when receiving a first web access request from the network terminal device (21), which indicates that it was sent from the predetermined domain name to the second domain name, replace the predetermined domain name in the first web access request with the first domain name and forward the first web access request to the second server (32) according to the second domain name in the first web access request, and
when receiving a first web access response from the second server (32), which indicates that it was sent from the second domain name to the first domain name, replace the first domain name with the predetermined domain name in the first web access response and forward the first web access response to the network terminal device (21).

2. The proxy server (10) as claimed in claim 1, wherein the controller (12) is further configured to, when receiving a second web access request from the network terminal device (21), which indicates that it was sent to the predetermined domain name, redirect the second web access request to the first server (31) according to the first domain name and forward information concerning a first web page, which is provided by the first server (31), to the network terminal device (21).

3. The proxy server (10) as claimed in claim 2, wherein the first web access request is initiated by content of the first web page when the network terminal device (21) loads the first web page.

4. The proxy server (10) as claimed in claim 2 or 3, further comprising:
a Domain Name System, DNS, configured to receive an inquiry for the predetermined domain name from the network terminal device (21), and reply to the network terminal device (21) with that the predetermined domain name is associated with an Internet Protocol, IP, address of the proxy server (10);
wherein the second web access request was sent by the network terminal device (21) according to the IP address.

5. The proxy server (10) as claimed in any of the previous claims, wherein the first web access response comprises information concerning a second web page, and the controller (12) is further configured to parse the information concerning the second web page to determine whether a header or content of the information concerning the second web page comprises the first domain name, and when the header or content comprises the first domain name, replace the first domain name with the predetermined domain name in the first web access response and forward the first web access response to the network terminal device (21).

6. The proxy server (10) as claimed in any of the previous claims, wherein the predetermined domain name comprises a port number.

7. The proxy server (10) as claimed in any of the previous claims, wherein the communication device (11) is further configured to provide a network connection to a third server (22) in the public network (20), the third server (22) has a third domain name identifiable in the public network (20) and a fourth domain name identifiable in the private network (30), and the controller (12) is further configured to:
when receiving a third web access request indicating that it was sent to the fourth domain name, replace the fourth domain name in the third web access request with the third domain name and forward the third web access request to the third server (22) according to the third domain name; and
when receiving a third web access response indicating that it was sent from the third domain name, replace the third domain name in the third web access response with the fourth domain name.

8. A cross-domain communication method executed by a proxy server (10) connected to a network terminal device (21) in a public network (20) and a first server (31) and a second server (32) in a private network (30), wherein the first server (31) has a first domain name identifiable in the private network (30) and a predetermined domain name identifiable in the public network (20), and the second server (32) has a second domain name identifiable in the private network (30), the cross-domain communication method comprising:
when receiving a first web access request from the network terminal device (21), which indicates that it was sent from the predetermined domain name to the second domain name, replacing the predetermined domain name in the first web access request with the first domain name and forwarding the first web access request to the second server (32) according to the second domain name in the first web access request, and
when receiving a first web access response from the second server (32), which indicates that it was sent from the second domain name to the first domain name, replacing the first domain name with the predetermined domain name in the first web access response and forwarding the first web access response to the network terminal device (21).

9. The cross-domain communication method as claimed in claim 8, further comprising:
when receiving a second web access request from the network terminal device (21), which indicates that it was sent to the predetermined domain name, redirecting the second web access request to the first server (31) according to the first domain name and forwarding information concerning a first web page, which is provided by the first server (31), to the network terminal device (21).

10. The cross-domain communication method as claimed in claim 9, wherein the first web access request is initiated by content of the first web page when the network terminal device (21) loads the first web page.

11. The cross-domain communication method as claimed in claim 9 or 10, further comprising:
providing a Domain Name System, DNS, to receive an inquiry for the predetermined domain name from the network terminal device (21) and reply to the network terminal device (21) with that the predetermined domain name is associated with an Internet Protocol, IP, address of the proxy server (10);
wherein the second web access request was sent by the network terminal device (21) according to the IP address.

12. The cross-domain communication method as claimed in any of the previous claims 8 to 11, wherein the first web access response comprises information concerning a second web page, and the cross-domain communication method further comprises:
parsing the information concerning the second web page to determine whether a header or content of the information concerning the second web page comprises the first domain name; and
when the header or content comprises the first domain name, replacing the first domain name with the predetermined domain name in the first web access response and forwarding the first web access response to the network terminal device (21).

13. The cross-domain communication method as claimed in any of the previous claims 8 to 12, wherein the predetermined domain name comprises a port number.

14. The cross-domain communication method as claimed in any of the previous claims 8 to 13, wherein the proxy server (10) is further connected to a third server (22) in the public network (20), the third server (22) has a third domain name identifiable in the public network (20) and a fourth domain name identifiable in the private network (30), and the cross-domain communication method further comprises:
when receiving a third web access request indicating that it was sent to the fourth domain name, replacing the fourth domain name in the third web access request with the third domain name and forwarding the third web access request to the third server (22) according to the third domain name; and
when receiving a third web access response indicating that it was sent from the third domain name, replacing the third domain name in the third web access response with the fourth domain name.

## Patentansprüche

1. Proxy-Server (10) mit:
einer Kommunikationseinrichtung (11), die dafür konfiguriert ist, Netzwerkverbindungen zu einem Netzwerkendgerät (21) in einem öffentlichen Netzwerk (20) und zu einem ersten Server (31) und einem zweiten Server (32) in einem privaten Netzwerk (30) bereitzustellen,
wobei der erste Server (31) einen im privaten Netzwerk (30) identifizierbaren ersten Domänennamen und einen im öffentlichen Netzwerk (20) identifizierbaren vorgegebenen Domänennamen aufweist, und wobei der zweite Server (32) einen im privaten Netzwerk (30) identifizierbaren zweiten Domänennamen aufweist; und
einer Steuereinheit (12), die dafür konfiguriert ist:
beim Empfang einer ersten Webzugriffsanforderung vom Netzwerkendgerät (21), die anzeigt, dass sie vom vorgegebenen Domänennamen an den zweiten Domänennamen übertragen wurde, den vorgegebenen Domänennamen in der ersten Webzugriffsanforderung durch den ersten Domänennamen zu ersetzen und die erste Webzugriffsanforderung gemäß dem zweiten Domänennamen in der ersten Webzugriffsanforderung an den zweiten Server (32) weiterzuleiten; und
beim Empfang einer ersten Webzugriffsantwort vom zweiten Server (32), die anzeigt, dass sie vom zweiten Domänennamen an den ersten Domänennamen übertragen wurde, den ersten Domänennamen durch den vorgegebenen Domänennamen in der ersten Webzugriffsantwort zu ersetzen und die erste Webzugriffsantwort an das Netzwerkendgerät (21) weiterzuleiten.

2. Proxy-Server (10) nach Anspruch 1, wobei die Steuereinheit (12) ferner dafür konfiguriert ist, beim Empfang einer zweiten Webzugriffsanforderung vom Netzwerkendgerät (21), die anzeigt, dass sie an den vorgegebenen Domänennamen übertragen wurde, die zweite Webzugriffsanforderung gemäß dem ersten Domänennamen an den ersten Server (31) umzuleiten und Information, die eine erste Webseite betrifft, die durch den ersten Server (31) bereitgestellt wird, an das Netzwerkendgerät (21) weiterzuleiten.

3. Proxy-Server (10) nach Anspruch 2, wobei die erste Webzugriffsanforderung durch den Inhalt der ersten Webseite initiiert wird, wenn das Netzwerkendgerät (21) die erste Webseite lädt.

4. Proxy-Server (10) nach Anspruch 2 oder 3, ferner mit:
einem Domain Name System, DNS, das dafür konfiguriert ist, eine Anfrage nach dem vorgegebenen Domänennamen vom Netzwerkendgerät (21) zu empfangen und dem Netzwerkendgerät (21) zu antworten, dass der vorgegebene Domänenname einer IP-, Internetprotokoll, Adresse des Proxy-Servers (10) zugeordnet ist, wobei die zweite Webzugriffsanforderung durch das Netzwerkendgerät (21) gemäß der IP-Adresse übertragen wurde.

5. Proxy-Server (10) nach einem der vorhergehenden Ansprüche, wobei die erste Webzugriffsantwort Information enthält, die eine zweite Webseite betrifft, und die Steuereinheit (12) ferner dafür konfiguriert ist, die Information, die die zweite Webseite betrifft, zu zerlegen, um zu bestimmen, ob ein Header oder Inhalt der Information, die die zweite Webseite betrifft, den ersten Domänennamen enthält, und, wenn der Header oder Inhalt den ersten Domänennamen enthält, den ersten Domänennamen durch den vorgegebenen Domänennamen in der ersten Webzugriffsantwort zu ersetzen und die erste Webzugriffsantwort an das Netzwerkendgerät (21) weiterzuleiten.

6. Proxy-Server (10) nach einem der vorhergehenden Ansprüche, wobei der vorgegebene Domänenname eine Portnummer enthält.

7. Proxy-Server (10) nach einem der vorhergehenden Ansprüche, wobei die Kommunikationseinrichtung (11) ferner dafür konfiguriert ist, eine Netzwerkverbindung zu einem dritten Server (22) im öffentlichen Netzwerk (20) bereitzustellen, wobei der dritte Server (22) einen im öffentlichen Netzwerk (20) identifizierbaren dritten Domänennamen und einen im privaten Netzwerk (30) identifizierbaren vierten Domänennamen aufweist, und wobei die Steuereinheit (12) ferner dafür konfiguriert ist:
beim Empfang einer dritten Webzugriffsanforderung, die anzeigt, dass sie an den vierten Domänennamen übertragen wurde, den vierten Domänennamen in der dritten Webzugriffsanforderung durch den dritten Domänennamen zu ersetzen und die dritte Webzugriffsanforderung gemäß dem dritten Domänennamen an den dritten Server (22) weiterzuleiten; und
beim Empfang einer dritten Webzugriffsantwort, die anzeigt, dass sie vom dritten Domänennamen übertragen wurde, den dritten Domänennamen in der dritten Webzugriffsantwort durch den vierten Domänennamen zu ersetzen.

8. Domänenübergreifendes Kommunikationsverfahren, das durch einen Proxy-Server (10) ausgeführt wird, der mit einem Netzwerkendgerät (21) in einem öffentlichen Netzwerk (20) und mit einem ersten Server (31) und mit einem zweiten Server (32) in einem privaten Netzwerk (30) verbunden ist, wobei der erste Server (31) einen im privaten Netzwerk (30) identifizierbaren ersten Domänennamen und einen im öffentlichen Netzwerk (20) identifizierbaren vorgegebenen Domänennamen aufweist, und wobei der zweite Server (32) einen im privaten Netzwerk (30) identifizierbaren zweiten Domänennamen aufweist,
wobei das domänenübergreifende Kommunikationsverfahren die Schritte aufweist:
Ersetzen des vorgegebenen Domänennamens in einer ersten Webzugriffsanforderung durch den ersten Domänennamen und Weiterleiten der ersten Webzugriffsanforderung gemäß dem zweiten Domänennamen in der ersten Webzugriffsanforderung an den zweiten Server (32) beim Empfang der ersten Webzugriffsanforderung vom Netzwerkendgerät (21), die anzeigt, dass sie vom vorgegebenen Domänennamen an den zweiten Domänennamen übertragen wurde; und
Ersetzen des ersten Domänennamens durch den vorgegebenen Domänennamen in einer ersten Webzugriffsantwort und Weiterleiten der ersten Webzugriffsantwort an das Netzwerkendgerät (21) beim Empfang der ersten Webzugriffsantwort vom zweiten Server (32), die anzeigt, dass sie vom zweiten Domänennamen an den ersten Domänennamen übertragen wurde.

9. Domänenübergreifendes Kommunikationsverfahren nach Anspruch 8, ferner mit den Schritten:
Umleiten einer zweiten Webzugriffsanforderung an den ersten Server (31) gemäß dem ersten Domänennamen und Weiterleiten von Information, die eine erste Webseite betrifft, die durch den ersten Server (31) bereitgestellt wird, an das Netzwerkendgerät (21) beim Empfang der zweiten Webzugriffsanforderung vom Netzwerkendgerät (21), die anzeigt, dass sie an den vorgegebenen Domänennamen übertragen wurde.

10. Domänenübergreifendes Kommunikationsverfahren nach Anspruch 9, wobei die erste Webzugriffsanforderung durch Inhalt der ersten Webseite initiiert wird, wenn das Netzwerkendgerät (21) die erste Webseite lädt.

11. Domänenübergreifendes Kommunikationsverfahren nach Anspruch 9 oder 10, ferner mit dem Schritt:
Bereitstellen eines Domain Name Systems, DNS, zum Empfangen einer Anfrage nach dem vorgegebenen Domänennamen vom Netzwerkendgerät (21) und Antworten an das Netzwerkendgerät (21) damit, dass der vorgegebene Domänenname einer IP-, Internetprotokoll, Adresse des Proxy-Servers (10) zugeordnet ist,
wobei die zweite Webzugriffsanforderung durch das Netzwerkendgerät (21) gemäß der IP-Adresse übertragen wurde.

12. Domänenübergreifendes Kommunikationsverfahren nach einem der Ansprüche 8 bis 11, wobei die erste Webzugriffsantwort Information enthält, die eine zweite Webseite betrifft, und wobei das domänenübergreifende Kommunikationsverfahren ferner den Schritt aufweist:
Zergliedern der Information, die die zweite Webseite betrifft, um zu bestimmen, ob ein Header oder ein Inhalt der Information, die die zweite Webseite betrifft, den ersten Domänennamen enthält; und
Ersetzen des ersten Domänennamens durch den vorgegebenen Domänennamen in der ersten Webzugriffsantwort und Weiterleiten der ersten Webzugriffsantwort an das Netzwerkendgerät (21), wenn der Header oder der Inhalt den ersten Domänennamen enthält.

13. Domänenübergreifendes Kommunikationsverfahren nach einem der Ansprüche 8 bis 12, wobei der vorgegebene Domänenname eine Portnummer enthält.

14. Domänenübergreifendes Kommunikationsverfahren nach einem der Ansprüche 8 bis 13, wobei der Proxy-Server (10) ferner mit einem dritten Server (22) im öffentlichen Netzwerk (20) verbunden ist, wobei der dritte Server (22) einen im öffentlichen Netzwerk (20) identifizierbaren dritten Domänennamen und einen im privaten Netzwerk (30) identifizierbaren vierten Domänennamen aufweist, und wobei das domänenübergreifende Kommunikationsverfahren ferner die Schritte aufweist:
Ersetzen des vierten Domänennamens in einer dritten Webzugriffsanforderung durch einen dritten Domänennamen und Weiterleiten der dritten Webzugriffsanforderung an den dritten Server (22) gemäß dem dritten Domänennamen beim Empfang der dritten Webzugriffsanforderung, die anzeigt, dass sie an den vierten Domänennamen übertragen wurde; und
Ersetzen des dritten Domänennamens in einer dritten Webzugriffsantwort durch den vierten Domänennamen beim Empfang der dritten Webzugriffsantwort, die anzeigt, dass sie vom dritten Domänennamen übertragen wurde.

## Revendications

1. Serveur de procuration (10), comprenant :
un dispositif de communication (11) conçu pour fournir des connexions de réseau à un dispositif terminal de réseau (21) dans un réseau public (20), et un premier serveur (31), et un deuxième serveur (32) dans un réseau privé (30),
où le premier serveur (31) a un premier nom de domaine identifiable dans le réseau privé (30) et un nom de domaine prédéterminé identifiable dans le réseau public (20), et le deuxième serveur (32) a un deuxième nom de domaine identifiable dans le réseau privé (30) ; et
un dispositif de commande (12) configuré pour :
lors de la réception d'une première demande d'accès au web provenant du dispositif terminal de réseau (21), qui indique qu'elle a été envoyée à partir du nom de domaine prédéterminé vers le deuxième nom de domaine, remplacer le nom de domaine prédéterminé dans la première demande d'accès au web avec le premier nom de domaine et transférer la première demande d'accès au web au deuxième serveur (32) en conformité avec le deuxième nom de domaine dans la première demande d'accès au web, et
lors de la réception d'une première réponse d'accès au web provenant du deuxième serveur (32), qui indique qu'elle a été envoyée à partir du deuxième nom de domaine vers le premier nom de domaine, remplacer le premier nom de domaine avec le première réponse d'accès au web et transférer la première réponse d'accès au dispositif terminal de réseau (21).

2. Serveur de procuration (10) selon la revendication 1, dans lequel le dispositif de commande (12) est en outre conçu, lors de la réception d'une deuxième demande d'accès au web provenant du dispositif terminal de réseau (21), qui indique qu'elle a été envoyée vers le nom de domaine prédéterminé, rediriger la deuxième demande d'accès au web vers le premier serveur (31) en conformité avec le premier nom de domaine et transférer l'information concernant une première page web qui est fournie par le premier serveur (31), au dispositif terminal de réseau (21).

3. Serveur de procuration (10) selon la revendication 2, dans lequel la première demande d'accès au web est initialisée par un contenu de la première page web lorsque le dispositif terminal de réseau (21) charge la première page web.

4. Serveur de procuration (10) selon la revendication 2 ou la revendication 3, comprenant en outre :
un système de nom de domaine, DNS, conçu pour recevoir une interrogation pour le nom de domaine prédéterminé à partir du dispositif terminal de réseau (21) et pour répondre au dispositif terminal de réseau (21) que ce nom de domaine prédéterminé est associé avec une adresse de protocole d'internet, IP, du serveur de procuration (10) ;
où la deuxième demande d'accès au web a été envoyée par le dispositif terminal de réseau (21) conformément à l'adresse IP.

5. Serveur de procuration (10) selon l'une quelconque des revendications précédentes, dans lequel la première réponse d'accès au web comprend une information concernant une deuxième page web, et le dispositif de commande (12) est en outre conçu pour analyser l'information concernant la deuxième page web afin de déterminer si une en-tête ou un contenu de l'information concernant la deuxième page web comprend le premier nom de domaine, et lorsque l'en-tête ou le contenu comprend le premier nom de domaine, pour remplacer le premier nom de domaine avec le nom de domaine prédéterminé dans la première réponse d'accès au web et pour transférer la première réponse d'accès au web au dispositif terminal de réseau (21).

6. Serveur de procuration (10) selon l'une quelconque des revendications précédentes, dans lequel le nom de domaine prédéterminé comprend un numéro de port.

7. Serveur de procuration (10) selon l'une quelconque des revendications précédentes, dans lequel le dispositif de communication (11) est en outre conçu pour fournir une connexion de réseau à un troisième serveur (22) dans le réseau public (20), le troisième serveur (22) a un troisième nom de domaine identifiable dans le réseau public (20) et un quatrième nom de domaine identifiable dans le réseau privé (30), et le dispositif de commande (12) est en outre conçu pour :
lors de la réception d'une troisième demande d'accès au web, indiquer qu'elle a été envoyée au quatrième nom de domaine, remplacer le quatrième nom de domaine dans la troisième demande d'accès au web avec le troisième nom de domaine et transférer la troisième demande d'accès au web au troisième serveur (22) conformément au troisième nom de domaine ; et
lors de la réception d'une troisième réponse d'accès au web, indiquer qu'elle a été envoyée à partir du troisième nom de domaine, remplacer le troisième nom de domaine dans la troisième réponse d'accès au web avec le quatrième nom de domaine.

8. Procédé de communication inter-domaines exécuté par un serveur de procuration (10) connecté à un dispositif terminal de réseau (21) dans un réseau public (20) et un premier serveur (31), et un deuxième serveur (32) dans un réseau privé (30), où le premier serveur (31) a un premier nom de domaine identifiable dans le réseau privé (30) et un nom de domaine prédéterminé identifiable dans le réseau public (20), et le deuxième serveur (32) a un deuxième nom de domaine identifiable dans le réseau privé (30) ; le procédé de communication inter-domaines comprenant :
lors de la réception d'une première demande d'accès au web provenant du dispositif terminal de réseau (21), qui indique qu'elle a été envoyée à partir du nom de domaine prédéterminé vers le deuxième nom de domaine, le remplacement du nom de domaine prédéterminé dans la première demande d'accès au web avec le premier nom de domaine et le transfert de la première demande d'accès au web au deuxième serveur (32) en conformité avec le deuxième nom de domaine dans la première demande d'accès au web, et
lors de la réception d'une première réponse d'accès au web provenant du deuxième serveur (32), qui indique qu'elle a été envoyée à partir du deuxième nom de domaine vers le premier nom de domaine, le remplacement du premier nom de domaine avec le premier nom de domaine avec le nom de domaine prédéterminé dans la première réponse d'accès au web et le transfert de la première réponse d'accès au dispositif terminal de réseau (21).

9. Procédé de communication inter-réseaux selon la revendication 8, comprenant en outre :
lors de la réception d'une deuxième demande d'accès au web provenant du dispositif terminal de réseau (21), qui indique qu'elle a été envoyée vers le nom de domaine prédéterminé, la réorientation de la deuxième demande d'accès au web vers le premier serveur (31) en conformité avec le premier nom de domaine et le transfert de l'information concernant une première page web qui est fournie par le premier serveur (31), au dispositif terminal de réseau (21).

10. Procédé de communication inter-réseaux selon la revendication 9, dans lequel la première demande d'accès au web est initialisée par un contenu de la première page web lorsque le dispositif terminal de réseau (21) charge la première page web.

11. Procédé de communication inter-réseaux selon la revendication 9 ou la revendication 10, comprenant en outre :
la fourniture d'un système de nom de domaine, DNS, conçu pour recevoir une interrogation pour le nom de domaine prédéterminé à partir du dispositif terminal de réseau (21) et pour répondre au dispositif terminal de réseau (21) que ce nom de domaine prédéterminé est associé avec une adresse de protocole d'internet, IP, du serveur de procuration (10) ;
où la deuxième demande d'accès au web a été envoyée par le dispositif terminal de réseau (21) conformément à l'adresse IP.

12. Procédé de communication inter-réseaux selon l'une quelconque des revendications précédentes 8 à 11, dans lequel la première réponse d'accès au web comprend une information concernant une deuxième page web, et le procédé de communication inter-réseaux comprend en outre :
l'analyse de l'information concernant la deuxième page web afin de déterminer si une en-tête ou un contenu de l'information concernant la deuxième page web comprend le premier nom de domaine ; et
lorsque l'en-tête ou le contenu comprend le premier nom de domaine, le remplacement du premier nom de domaine avec le nom de domaine prédéterminé dans la première réponse d'accès au web et le transfert de la première réponse d'accès au web au dispositif terminal de réseau (21).

13. Procédé de communication inter-réseaux selon l'une quelconque des revendications précédentes 8 à 12, dans lequel le nom de domaine prédéterminé comprend un numéro de port.

14. Procédé de communication inter-réseaux selon l'une quelconque des revendications précédentes 8 à 13, dans lequel le serveur de procuration (10) est en outre connecté à un troisième serveur (22) dans le réseau public (20), le troisième serveur (22) a un troisième nom de domaine identifiable dans le réseau public (20) et un quatrième nom de domaine identifiable dans le réseau privé (30), et le procédé de communication inter-réseaux comprend en outre :
lors de la réception d'une troisième demande d'accès au web, l'indication qu'elle a été envoyée au quatrième nom de domaine, le remplacement du quatrième nom de domaine dans la troisième demande d'accès au web avec le troisième nom de domaine et le transfert de la troisième demande d'accès au web au troisième serveur (22) conformément au troisième nom de domaine ; et
lors de la réception d'une troisième réponse d'accès au web, l'indication qu'elle a été envoyée à partir du troisième nom de domaine, le remplacement du troisième nom de domaine dans la troisième réponse d'accès au web avec le quatrième nom de domaine.
